# EUROPEAN PATENT SPECIFICATION

(11) **EP 4 001 357 B1**
(45) Date of publication and mention of the grant of the patent: **09.07.2025**
(21) Application number: 20841431.8
(22) Date of filing: 10.07.2020
(51) Int. Cl.: C08K 5/12, C08K 5/521, C08K 5/00, C08K 3/016, C08K 3/22, C08K 3/16, C08L 27/06, C08J 9/00, D21H 27/20, C08K 5/101

(54) **VINYL CHLORIDE RESIN COMPOSITION FOR WALLPAPER**
VINYLCHLORIDHARZZUSAMMENSETZUNG FÜR TAPETEN
COMPOSITION DE RÉSINE DE CHLOROÉTHÈNE POUR PAPIER PEINT

(30) Priority: 16.07.2019 KR 20190085660
(43) Date of publication of application: 25.05.2022
(73) Proprietor: Hanwha Solutions Corporation, Jung-gu Seoul 04541 (KR)
(72) Inventor: JANG, Taeyoung, Daejeon 34128 (KR); KIM, Jaesong, Daejeon 34128 (KR)
(74) Representative: Berggren Oy
(86) International application number: PCT/KR2020/009088
(87) International publication number: WO 2021/010669

(56) References cited:
- EP-A1- 2 810 982
- WO-A2-2012/099382
- JP-A- H05 186 678
- KR-A- 20090 038 514
- KR-A- 20140 008 337
- KR-A- 20160 047 221
- KR-A- 20160 105 830

## Description

The present invention relates to a vinyl chloride resin composition for wallpaper that is environmentally friendly and has excellent flame retardancy.

### [Background Art]

A vinyl chloride resin is a homopolymer of vinyl chloride or a copolymer containing 50% or more of vinyl chloride, and is one of five general-purpose thermoplastic resins prepared by suspension polymerization and emulsion polymerization. Among them, a vinyl chloride resin prepared by emulsion polymerization is mixed with supplementary materials having special functions, such as a plasticizer, a stabilizer, a filler, a blowing agent, a pigment, and is applied in the form of plastisol to a wide variety of fields such as flooring, wallpaper, tarpaulin, artificial leather, toys, coating materials of the lower part of automobiles through coating molding and mold coating processing methods.

A wallpaper is a product most exposed in residential and office spaces, and 60% or more of them are prepared using the vinyl chloride resin. Recently, a main issue of wallpaper relates to environmentally friendly wallpaper, and a standard for judging an environmentally friendly property has been determined by HB grades (three grades from most excellent, excellent, good) ranked according to the emission amount of the volatile organic compounds (VOCs) by Korea Air Clean Association, and determined by whether or not containing phthalate-based plasticizers that are suspected as environmental hormone, which is an endocrine disrupter disturbing or confusing hormone action of human.

A wallpaper using a vinyl chloride resin is prepared by mixing the vinyl chloride resin with solid raw materials, such as a filler, a pigment, and liquid raw materials, such as a plasticizer, a stabilizer, a viscosity depressant, to prepare a plastisol, and then by coating the plastisol on a paper, and by conducting processing operations such as gelling, printing, foaming and embossing.

The plasticizer is a liquid component accounting for a large content in the vinyl chloride resin composition for wallpaper, and it exists while being mixed with the vinyl chloride resin at the initial stage of production, and as time elapses, it is gradually discharged outside of the vinyl chloride resin, exhibiting a migration phenomenon. When the discharged plasticizer is inflowed into the body, it may inhibit normal activities of endocrine system directly involved in life activity or may provoke abnormal reactions to cause fatal harm, and therefore, the migration phenomenon of the plasticizer is an important reason for limiting the use of plasticizers, particularly, phthalate-based plasticizers in flooring, wallpaper, tarpaulin, artificial leather, toys, coating material of the lower part of automobiles, which may have a direct influence on the body.

Further, in the case of an environmentally friendly silk wallpaper, unlike the existing wallpaper, a phthalate-based plasticizer cannot be used, and therefore, a dioctyl phthalate (DOTP)-based non-phthalate-based plasticizer is mainly used. However, since the DOTP-based plasticizer easily migrates and is prone to dye transfer due to good compatibility with a dye, when a silk wallpaper is constructed on a plaster board, dye included in the plaster board paper may be transferred to the surface of the silk wallpaper, thus considerably generating spots and discolorations.

Meanwhile, a vinyl chloride resin composition for wallpaper having flame retardancy is used in order to minimize damage in the event of fires and to slow the spreading of fires. However, a flame retardant for imparting flame retardancy is a solid raw material, and has a problem of increasing the viscosity of plastisol. When preparing a wallpaper, the viscosity of plastisol is an important property determining coatability during a coating process and the productivity of the wallpaper, and as the plastisol has lower viscosity, it is more favorable. For this reason, in order to lower the viscosity, a viscosity depressant is excessively added to the vinyl chloride resin composition for wallpaper including a solid-phase flame retardant, and the excess viscosity depressant not only generates a large amount of volatile organic compounds but also deteriorates product quality.

Accordingly, there is a need for the development of a vinyl chloride resin composition for wallpaper exhibiting excellent flame retardancy, migration resistance, and processability while reducing the generation of volatile organic compounds.

EP 2 810 982 A1 discloses dialkyl esters of 1,4' cyclohexane di-carboxylic acid and their use as plasticisers.

KR 2016 0105830 A discloses phtalate-free polyvinyl chloride plastisol compositions.

WO 2012 099382 A2 discloses a vinyl chloride resin composition for wallpaper comprising diethylhexylcyclohexane.

KR 2014 0008337 A discloses a vinyl chloride resin composition.

### [Technical Problem]

In order to solve the problems of the prior art, there is provided a vinyl chloride resin composition for wallpaper that is environmentally friendly and has excellent flame retardancy.

### [Technical Solution]

The subject matter of the present invention is characterized in the claims.

To achieve the above object, according to one embodiment of the present invention, provided is a vinyl chloride resin composition for wallpaper, including
a) with respect to 100 parts by weight of a vinyl chloride resin,
b) 40 parts by weight to 90 parts by weight of di(2-ethylhexyl)cyclohexane-1,4-dicarboxylate;
c) 10 by weight to 30 parts by weight of a phosphate-based plasticizer;
d) 50 parts by weight to 90 parts by weight of an antimony-based flame retardant; and
e) 5 parts by weight to 20 parts by weight of a carboxylic acid ester-based viscosity depressant.

The vinyl chloride resin may have a degree of polymerization of 700 to 1,700, or a weight average molecular weight of 45,000 g/mol to 200,000 g/mol.

A mixing weight ratio of the di(2-ethylhexyl)cyclohexane-1,4-dicarboxylate and the phosphate-based plasticizer may be in the range of 4:3 to 6:1.

The phosphate-based plasticizer may be one or more selected from the group consisting of triisopropyl phenyl phosphate, tricresyl phosphate, and diphenyl cresyl phosphate.

The antimony-based flame retardant may be one or more selected from the group consisting of antimony trioxide, antimony pentoxide, metal antimony, and antimony trichloride.

The antimony-based flame retardant may have a particle size of 100 µm or less.

The viscosity depressant may be carboxylic acid ester represented by the following Chemical Formula 1: 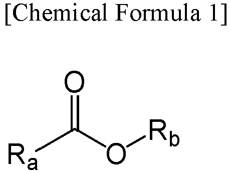 (in Chemical Formula 1, Rₐ and R_{b} are each independently a C₈₋₂₂ linear or branched alkyl group.)

The viscosity depressant may have a density at 20 °C of 0.85 g/cm³ to 0.9 g/cm³, a solidification point of -7 °C or lower, and a flash point of 120 °C or higher.

The vinyl chloride resin composition of the present invention may further include one or more additives selected from the group consisting of a dispersant, a stabilizer, a blowing agent, a filler, and titanium oxide, in addition to a) to e).

The dispersant may be a phosphoric acid ester-based compound, a fatty acid ester-based compound, or a mixture thereof.

The stabilizer may be one or more selected from the group consisting of Na-Zn-based compounds, Ca-Zn-based compounds, K-Zn-based compounds, Ba-Zn-based compounds, organic tin-based compounds, metallic soap compounds, phenolic compounds, and phosphorous acid ester-based compounds.

The blowing agent may include a chemical blowing agent, a physical blowing agent, or a mixture thereof.

The filler may be one or more selected from the group consisting of calcium carbonate, calcite, talc, kaolin, silica, alumina, magnesium hydroxide, and clay.

In one embodiment, the vinyl chloride resin composition of the present invention may further include 0.5 parts by weight to 5 parts by weight of the dispersant, 0.5 parts by weight to 7 parts by weight of the stabilizer, 0.5 parts by weight to 7 parts by weight of the blowing agent, 30 parts by weight to 150 parts by weight of the filler, and 1 part by weight to 20 parts by weight of titanium oxide with respect to 100 parts by weight of the vinyl chloride resin, in addition to a) to e).

The vinyl chloride resin composition of the present invention may preferably have a viscosity at 25 °C of 1,000 cps to 20,000 cps, as measured under conditions of spindle no. 6 and a rotational speed of 20 RPM using a rotary viscometer, after aging at 25 °C for 1 hour. Further, according to another embodiment of the present invention, provided is a wallpaper including the vinyl chloride resin composition.

The vinyl chloride resin composition for wallpaper according to the present invention exhibits excellent flame retardant performance even with a reduced content of a flame retardant and has excellent processability due to low viscosity. As a result, the content of a viscosity depressant which is added to reduce viscosity of a plastisol, furthermore, a liquid stabilizer which is optionally added as another additive may be minimized, and generation of volatile organic compounds from the viscosity depressant and the liquid stabilizer and quality deterioration of products thereby may be prevented.

Further, the vinyl chloride resin composition for wallpaper exhibits excellent migration resistance, and as a result, color transfer caused by dyes may be prevented, thereby exhibiting remarkably improved discoloration properties.
The vinyl chloride resin composition may be used in flooring, wallpaper, tarpaulin, artificial leather, toys, coating materials of the lower part of automobiles, but may be useful in the production of wallpapers, particularly, environmentally friendly silk wallpapers, because it is environmentally friendly and has excellent discoloration properties.

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The present invention may be variously modified and have various forms, and specific exemplary embodiments will be described and explained in detail below. However, it is not intended to limit the present invention to the specific exemplary embodiments.

As used herein, the term "vinyl chloride resin composition" includes a "plastisol" representing a mixture of a resin and a plasticizer which are mixed so as to be molded, casted, or processed into a continuous film by heating, and the plastisol may represent, for example, a paste obtained by mixing a vinyl chloride resin and a plasticizer.

Hereinafter, a vinyl chloride resin composition for wallpaper according to specific embodiments of the present invention will be explained in more detail.

A vinyl chloride resin composition for wallpaper according to one embodiment of the present invention includes
a) with respect to 100 parts by weight of a vinyl chloride resin,
b) 40 parts by weight to 90 parts by weight of di(2-ethylhexyl)cyclohexane-1,4-dicarboxylate;
c) 10 parts by weight to 30 parts by weight of a phosphate-based plasticizer;
d) 50 parts by weight to 90 parts by weight of an antimony-based flame retardant; and
e) 5 parts by weight to 20 parts by weight of a carboxylic acid ester-based viscosity depressant.

Hereinafter, each constructional element will be explained in detail.

### Vinyl chloride resin

In the vinyl chloride resin composition according to one embodiment of the present invention, the vinyl chloride resin may be a homopolymer homopolymerized from a vinyl chloride monomer, or a copolymer polymerized from a vinyl chloride monomer and a comonomer copolymerizable therewith, and any one of them or a mixture thereof may be used for the preparation of the vinyl chloride resin composition.

The comonomer copolymerizable with the vinyl chloride monomer may include, specifically, vinyl esters such as vinyl acetate, vinyl propionate, vinyl stearate; vinyl ethers having an alkyl group, such as methyl vinyl ether, ethyl vinyl ether, octyl vinyl ether, lauryl vinyl ether; vinylidene halides such as vinylidene chloride; unsaturated carboxylic acid and acid anhydride thereof, such as acrylic acid, methacrylic acid, fumaric acid, maleic acid, itaconic acid, maleic anhydride, itaconic anhydride; unsaturated carboxylic acid esters, such as methyl acrylate, ethyl acrylate, monomethyl maleate, dimethyl maleate, butyl benzyl maleate; aromatic vinyl compounds, such as styrene, α-methyl styrene, divinyl benzene; unsaturated nitriles, such as acrylonitrile, methacrylonitrile; olefins such as ethylene, propylene; and crosslinkable monomers such as diallyl phthalate, and any one or a mixture of two or more thereof may be used. Among them, it is more preferable that the comonomer includes vinyl acetate, because it has excellent compatibility with the vinyl chloride monomer, and may improve compatibility with a plasticizer constituting a resin composition after polymerization.

As explained above, the vinyl chloride resin may be prepared by polymerizing the vinyl chloride monomer alone, or by polymerizing the vinyl chloride monomer and the comonomer copolymerizable therewith, wherein the polymerization method is not particularly limited, and the polymerization may be conducted by common methods known in the art to which the present invention pertains, such as microsuspension polymerization, emulsion polymerization, seed emulsion polymerization.

Among them, when prepared by emulsion polymerization or microsuspension polymerization, the prepared vinyl chloride resin may have a small and uniform average particle size, as compared with those prepared by other polymerization methods. Further, the average particle size and uniformity of the vinyl chloride resin may be further controlled by controlling polymerization conditions during polymerization.

The average particle size (D₅₀) of the vinyl chloride resin applicable in the present invention may be 0.1 µm to 40 µm, more specifically 1 µm to 10 µm. When having the particle size within the above range, the vinyl chloride resin may exhibit excellent dispersibility, and flowability of the plasticized vinyl chloride resin composition may be further improved.

When the average particle size (D₅₀) is greater than 40 µm, the dispersibility of the vinyl chloride resin particles themselves may be low, and when it is less than 1 µm, there is a concern about deterioration of dispersibility due to aggregation between the vinyl chloride resin particles. Meanwhile, in the present disclosure, the average particle size (D₅₀) of the vinyl chloride resin may be measured by a common method of measuring a particle size distribution, such as optical microscopy, a light scattering method.

Further, the degree of polymerization and the weight average molecular weight of the vinyl chloride resin may influence the compatibility with components constituting the vinyl chloride resin composition, particularly, the compatibility with the plasticizer, and processability of plastisol, and may be appropriately adjusted by controlling polymerization conditions during polymerization.

Specifically, the vinyl chloride resin may have a degree of polymerization of 700 to 1,700, or a weight average molecular weight (Mw) of 45,000 g/mol to 200,000 g/mol. When having the degree of polymerization and the weight average molecular weight within the above ranges, dispersibility may be excellent, compatibility with the plasticizer may be good, and processability of the plastisol may be improved.

When the degree of polymerization of the vinyl chloride resin is less than 700 or Mw is less than 45,000 g/mol, due to insufficient properties, there is a concern about deterioration of durability and constructability of a wallpaper, and when the degree of polymerization is greater than 1,700 or Mw is greater than 200,000 g/mol, there is a concern about deterioration of foamability. More specifically, the degree of polymerization may be 900 or more and less than 1,050, or the weight average molecular weight(Mw) may be 60,000 g/mol to 150,000 g/mol.

The degree of polymerization of the vinyl chloride resin may be measured according to ASTM D1 243-79.

Meanwhile, in the present invention, the weight average molecular weight (Mw) of the vinyl chloride resin is a standard polystyrene conversion value by gel permeation chromatography.

### Plasticizer

The vinyl chloride resin composition according to one embodiment of the present invention includes di(2-ethylhexyl)cyclohexane-1,4-dicarboxylate (DEHCH) and a phosphate-based plasticizer as a plasticizer.

In the existing environmentally friendly silk wallpapers, it is impossible to use a phthalate-based plasticizer, and thus dioctyl terephthalate (DOTP)-based non-phthalate-based plasticizers have been mainly used. However, when a solid-phase flame retardant is additionally used to impart flame retardancy, the viscosity of the composition increases and processability decreases. In order to make up for this, an excessive amount of viscosity depressant must be used. In this case, a large amount of volatile organic compounds is released from the viscosity depressant. There has been a problem of causing not only environmental problems, but also deterioration of product quality.

For this reason, in the present invention, by replacing DOTP, DEHCH and a phosphate-based plasticizer are used as the plasticizers for the vinyl chloride resin composition to solve the above problem. When DEHCH and the phosphate-based plasticizer are used in a mixture, flame retardancy is superior to that of DOTP plasticizer, and thus the content of the flame retardant that causes an increase in the viscosity of the composition may be reduced. Therefore, since the amount of the viscosity depressant may be minimized, the emission of volatile organic compounds may be significantly reduced. In addition, the plasticizer exhibits excellent compatibility with additives included in the vinyl chloride resin composition, and may improve productivity by increasing a gelation rate of the resin composition.

With regard to the plasticizers, di(2-ethylhexyl)cyclohexane-1,4-dicarboxylate (DEHCH) is a compound having the following structure, and also called DEHCH as an abbreviation in English.

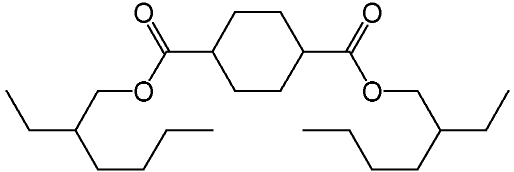

DEHCH has low viscosity at room temperature and at a low temperature, thereby realizing excellent coatability, and it has a rapid gelation rate and excellent foaming property. Further, since DEHCH may minimize generation of volatile organic compounds, it has high stability to environment.

Further, a plasticizer in a wallpaper easily permeates into the surrounding by diffusion, and if it permeates into a paper layer, it is highly probable that dyes in a plaster board base paper may be transferred to the wallpaper surface. However, since DEHCH has excellent migration resistance, the amount of diffusion to the outside of the wallpaper is small, and as a result, it less permeates into paper, thereby preventing dye transfer. In addition, since DEHCH is not easily mixed with ink, as compared with DOTP, it is favorable for discoloration resistance.

The DEHCH may be included in an amount of 40 parts by weight to 90 parts by weight with respect to 100 parts by weight of the vinyl chloride resin. When the amount of the DEHCH is less than 40 parts by weight, the viscosity of the vinyl chloride resin composition or plastisol may increase, and thus there is a concern about deterioration of coating property or deterioration of product flexibility. When the amount exceeds 90 parts by weight, a bleeding effect may easily occur in which the plasticizer leaks to the surface of a molded product, which causes surface stickiness, and thus there may be a problem in processing and finished products, and the flame retardancy performance may be significantly deteriorated. Considering the better effects on reducing the viscosity, securing flame retardancy, and preventing the bleeding phenomenon by controlling the DEHCH content with respect to the vinyl chloride resin, the DEHCH may be included in an amount of 40 parts by weight to 70 parts with respect to 100 parts by weight of the vinyl chloride resin.

The phosphate-based plasticizer exhibits the flame retardant property, low viscosity at room temperature and at a low temperature, and good foaming property. In addition, the phosphate-based plasticizer is environmentally friendly because there is little risk of releasing volatile organic compounds or environmental hormones.

The phosphate-based plasticizer may be, for example, one or more selected from the group consisting of triisopropyl phenyl phosphate (or triphenyl phosphates isopropylate), tricresyl phosphate, and diphenyl cresyl phosphate. The phosphate-based plasticizer as described above has excellent flame retardancy, and thus it is possible to reduce the content of the flame retardant in the vinyl chloride resin composition. As a result, it is possible to achieve excellent viscosity characteristics without adding an excessive amount of the viscosity depressant.

In general, the phosphate-based plasticizer may be included in an amount of more than 5 parts by weight to 30 parts by weight or less with respect to 100 parts by weight of the vinyl chloride resin. When the amount of the phosphate-based plasticizer is 5 parts by weight or less, the effect of improving flame retardancy may not be obtained, and thus there is a problem in that an excessive amount of the flame retardant must be separately added. When the amount of the phosphate-based plasticizer is more than 30 parts by weight, viscosity may increase and there may be a problem in the foaming property. According to the present invention, the phosphate-based plasticizer is included in an amount of 10 parts by weight to 30 parts by weight with respect to 100 parts by weight of the vinyl chloride resin.

Meanwhile, in order to achieve the above-described effect, it may be preferable that a mixing weight ratio of DEHCH and the phosphate-based plasticizer is 4:3 to 6:1. When they are included in the above weight ratio, excellent flame retardancy may be secured, and migration characteristics of the plasticizer may be effectively improved.

When the content of DEHCH is too small, there is a concern about deterioration in the thermal stability and foamability of the resin composition. On the contrary, when the content of the phosphate-based plasticizer is too small, it is difficult to secure the effect of improving flame retardancy, and therefore, the flame retardant must be further added. In this case, due to the viscosity depressant which is further added in order to prevent the viscosity of the resin composition from increasing, a large amount of volatile organic compounds may be generated or a bleeding problem may occur. Accordingly, the weight ratio of the DEHCH and the phosphate-based plasticizer may be 4:3 to 4:1, and more preferably, 4:3 to 3:1.

### Antimony-based flame retardant

In the present invention, in order to impart flame retardancy to the vinyl chloride resin composition, an antimony-based flame retardant is included.

The flame retardant applicable in the vinyl chloride resin composition includes halogen-based flame retardants such as bromine-based flame retardants and chlorine-based flame retardants, inorganic flame retardants such as aluminum hydroxide, magnesium hydroxide, zinc stannate, phosphorus-based flame retardants, molybdate-based flame retardants, antimony-based flame retardants Among them, the antimony-based flame retardants exhibit the best characteristics as the flame retardant for the vinyl chloride-based resin, and has excellent compatibility with DEHCH and the phosphate-based plasticizer. Therefore, in the present invention, the antimony-based flame retardants are used to impart sufficient flame retardancy to the vinyl chloride resin composition.

As the antimony-based flame retardants, one or more selected from the group consisting of antimony trioxide (Sb₂O₃), antimony pentoxide (Sb₂O₅), metal antimony (Sb), and antimony trichloride (SbCl₃) may be used. Among them, antimony trioxide may be preferably used, because effective flame retardancy may be secured even though it is used in a small amount.

In the present invention, a combination of DEHCH and the phosphate-based plasticizer having excellent flame retardancy is used as a plasticizer, thereby securing excellent flame retardant property even with a reduced content of the flame retardant, as compared with the existing vinyl chloride resin composition having flame retardancy.

In general, the antimony-based flame retardant may be included in an amount of more than 40 parts by weight to less than 100 parts by weight. According to the present invention, the antimony-based flame retardant is included in an amount of 50 parts by weight to 90 parts by weight with respect to 100 parts by weight of the vinyl chloride resin. When the antimony-based flame retardant is included in an amount of 100 parts by weight or more with respect to 100 parts by weight of the vinyl chloride resin, the viscosity of the resin composition increases due to the solid flame retardant, and thus there is a problem in that a viscosity depressant must be further added. When the amount of the antimony-based flame retardant is 40 parts by weight or less, sufficient flame retardant effect may not be obtained, and thus it is preferable to satisfy the above range.

When the particle size of the antimony-based flame retardant is 100 µm or more, there is a possibility that defects may occur during wallpaper processing. Therefore, the maximum particle size of the flame retardant is preferably less than 100 µm or 70 µm or less, and the lower limit is not particularly limited.

The vinyl chloride resin composition for wallpaper of the present invention may include only the above-described antimony-based flame retardant as the flame retardant. However, the antimony-based flame retardant may be used together with an inorganic flame retardant such as aluminum hydroxide, magnesium hydroxide in the range that does not impair the effect of the present invention.

### Viscosity depressant

The vinyl chloride resin composition for wallpaper of the present invention includes a viscosity depressant for the purpose of improving processability by reducing viscosity of the composition. In this regard, a carboxylic acid ester-based compound may be used as the viscosity depressant.

The carboxylic acid ester-based viscosity depressant has excellent compatibility with the above-described plasticizer and vinyl chloride resin, and has low volatility. Thus, when used in the vinyl chloride resin composition, it may decrease generation of volatile organic compounds.

Specifically, the viscosity depressant may be carboxylic acid ester represented by the following Chemical Formula 1, prepared by an esterification reaction of C₈₋₂₂ carboxylic acid with alcohol having a C₈₋₂₂ alkyl group: 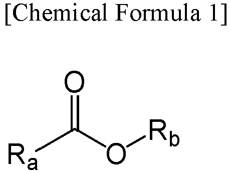 (in Chemical Formula 1, Rₐ and R_{b} are each independently a C₈₋₂₂ linear or branched alkyl group, such as n-octyl, t-butyl, n-nonyl, or n-decyl)

Further, as commercially available viscosity depressant, BYK LP-R 22274^{®}, Viscobyk^{®}5025, 5125 and 5050, Jayflex^{®} 615 or Exxsol^{®} D100 may be used. Among them, BYK LP-R 22274^{®}, which has excellent compatibility with the above-described plasticizer and thus has small migration, and has a rapid gelation rate, may be more preferably used.

Further, the viscosity depressant may have a density at 20°C of 0.85 g/cm³ to 0.9 g/cm³, more specifically 0.87 g/cm³ to 0.9 g/cm³, and a solidification point of -7 °C or lower, more specifically -10 °C to - 40 °C, and a flash point of 120 °C or higher, more specifically, 130 °C to 200 °C. When it fulfills the solidification point and flash point together with the above-described density condition, it may have a rapid gelation rate and excellent viscosity depressing capability, thereby further improving processability of the resin composition.

The viscosity depressant may be included in an amount of 5 parts by weight to 20 parts by weight with respect to 100 parts by weight of the vinyl chloride resin. When the content of the viscosity depressant is less than 5 parts by weight, due to high viscosity of the formulation, there is a concern about generation of defects, such as sol drop, in the processing operation, and when the content is more than 20 parts by weight, foaming property of a wallpaper may be deteriorated, and due to an excessive decrease in the viscosity, there is a concern about deterioration of moldability. Considering the remarkable effects of preventing defect generation and moldability deterioration according to control of the content of the viscosity depressant with respect to the vinyl chloride resin, the viscosity depressant may be more specifically included in an amount of 10 parts by weight to 20 parts by weight with respect to 100 parts by weight of the vinyl chloride resin.

### Other additives

The vinyl chloride resin composition for wallpaper of the present invention may further include one or more additives selected from the group consisting of a dispersant, a stabilizer, a blowing agent, a filler, and titanium oxide according to the physical properties to be improved in the composition.

The dispersant is adsorbed onto the surface to decrease attractive force between particles, and prevents reaggregation, thereby facilitating movement of particles, and stabilizing viscosity and behavior of the resin composition.

In the vinyl chloride resin composition according to one embodiment of the present invention, as the dispersant, one or more acidic ester-based compounds having excellent dispersibility may be used. The acidic ester-based compounds not only exhibit excellent dispersibility in the vinyl chloride resin, but also exhibit an additional effect of decreasing the viscosity due to a characteristic of lowering the viscosity of the formulation.

Specifically, the acidic ester-based compounds may include phosphoric acid ester-based compounds, such as phosphoric acid ester; or fatty acid esters, such as stearyl cetyl stearates (CETS), ethylene glycol distearate (EGDS), glyceryl monooleate (GMO), pentaerythritol distearate (PEDS), pentaerythritol tetrastearate (PETS), glyceryl monostearate (GMS), stearyl stearate, distearyl phthalate, and any one or two or more compounds thereof may be used. Among them, phosphoric acid ester-based compounds may be preferably used. Further, commercially available BYK-LP W 21809 may be used.

Further, the dispersant may have a density at 20 °C of 0.9 g/cm³ to 1.3 g/cm³, and more specifically 0.90 g/cm³ to 1.1 g/cm³, and an acid value of 80 mgKOH/g to 120 mgKOH/g, and more specifically 90 mgKOH/g to 100 mgKOH/g. When the dispersant fulfills the above density and acid value conditions, it may not only exhibit excellent dispersibility, but also further improve the effect of decreasing the viscosity of the resin composition.

Further, the dispersant may have a flash point of 80 °C or higher, and more specifically 100 °C to 300 °C. By having a flash point of the above range, the dispersant may improve thermal stability of the resin composition.

The dispersant may be included in an amount of 0.5 parts by weight to 5 parts by weight with respect to 100 parts by weight of the vinyl chloride resin. When the amount of the dispersant is less than 0.5 parts by weight, there is a concern about bad dispersibility of the formulation, and when the amount is more than 5 parts by weight, there is a concern about deterioration of foaming property of a wallpaper. Considering the remarkable effects in terms of dispersibility and foaming property according to control of the content of the dispersant with respect to the vinyl chloride resin, the dispersant may be more specifically included in an amount of 1 part by weight to 3 parts by weight with respect to 100 parts by weight of the vinyl chloride resin.

The stabilizer is added to prevent changes in various physical properties, which may be generated when HCl is separated from the vinyl chloride resin to form chromophore of a polyene structure, and to cause cleavage or cross-linking of the main chain. The stabilizer may be a liquid compound. Specific examples thereof may include Na-Zn-based compounds, Ca-Zn-based compounds, K-Zn-based compounds, Ba-Zn-based compounds, organic tin-based compounds, metallic soap-based compounds, phenolic compounds, or phosphorous ester-based compounds, and among them, one or a mixtures of two or more thereof may be used. More specific examples thereof may include Na-Zn-based compounds; Ca-Zn-based compounds; K-Zn-based compounds; Ba-Zn-based compounds; organic tin-based compounds, such as mercaptide-based compounds, maleic acid-based compounds, or carboxylic acid-based compounds; metallic soap-based compounds, such as Mg-stearate, Ca-stearate, Pb-stearate, Cd-stearate, or Ba-stearate; phenolic compounds; or phosphorous ester-based compounds, and among them, Ca-Zn-based compounds, Na-Zn-based compounds, or K-Zn-based compounds may be more preferably used.

The stabilizer is included in an amount of 0.5 parts by weight to 7 parts by weight, and more preferably, 1 part by weight to 4 parts by weight with respect to 100 parts by weight of the vinyl chloride resin. When the content of the stabilizer is less than 0.5 parts by weight, there is a problem in that thermal stability may be lowered, and when the amount is more than 7 parts by weight, thermal stability may be exhibited more than necessary.

Further, the blowing agent may include chemical blowing agents, physical blowing agents, and among them, any one or a mixture of two or more thereof may be used.

Specifically, the chemical blowing agent is not particularly limited, as long as it is a compound that is decomposed at a specific temperature or higher to generate gas, and may be exemplified by azodicarbonamide, azodiisobutyro-nitrile, benzenesulfonhydrazide, 4,4-oxybenzene sulfonyl-semicarbazide, p-toluene sulfonyl semicarbazide, barium azodicarboxylate, N,N'-dimethyl-N,N'-dinitrosoterephthalamide, trihydrazino triazine Further, sodium bicarbonate, potassium bicarbonate, ammonium bicarbonate, sodium carbonate, ammonium carbonate may also be exemplified.

Further, the physical blowing agent may include inorganic blowing agents such as carbon dioxide, nitrogen, argon, water, air, helium; organic blowing agents, such as aliphatic hydrocarbon having 1 to 9 carbon atoms, aliphatic alcohol having 1 to 3 carbon atoms, halogenated aliphatic hydrocarbon having 1 to 4 carbon atoms Further, the aliphatic hydrocarbon compounds may include methane, ethane, propane, normal butane, isobutene, normal pentane, isopentane, neopentane; the aliphatic alcohols may include methanol, ethanol, normal propanol, isopropanol; and the halogenated aliphatic hydrocarbon compounds may include methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), 1,1,2,2-tetrafluoromethane (HFC-134), 1,1,1,3,3-pentafluorobutane (HFC-365mfc), 1,1,1,3,3-pentafluoropropane (HFC.sub.13 245fa), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane, methyl chloride, methylene chloride, ethyl chloride, 1,1,1-trichloroethane, 1,1-dichloro-1-fluoroethane (HCFC141b), 1-chloro-1,1-difluoroethane (HCFC-142b), chlorodifluoromethane (HCFC-22), 1,1-dichloro-2,2,2-trifluoroethane (HCFC-123), 1-chloro-1,2,2,2-tetrafluoroethane (HCFC-124), trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, dichlorohexafluoropropane. Among the above-described compounds, any one or a mixture of two or more thereof may be used as the blowing agent.

The blowing agent may be included in an amount of 0.5 parts by weight to 7 parts by weight with respect to 100 parts by weight of the vinyl chloride resin. When the amount of the blowing agent is less than 0.5 parts by weight, the amount of gas generated for blowing may be too small, and therefore, blowing effect may be insignificant or cannot be expected, and when the amount is more than 7 parts by weight, the amount of gas generated may be too large, and therefore, it may be difficult to expect required properties.

Further, the filler is used for the purpose of improving productivity, and dry touch of the vinyl chloride resin composition. Specific examples of the filler may include calcium carbonate, calcite, talc, kaolin, silica, alumina, magnesium hydroxide, clay, and among them, any one or a mixture of two or more thereof may be used.

The filler may be included in an amount of 30 parts by weight to 150 parts by weight, and more preferably 50 parts by weight to 130 parts by weight with respect to 100 parts by weight of the vinyl chloride resin. When the content of the filler is less than 30 parts by weight, there is a problem in that dimensional stability and economic efficiency may be lowered, and when the content is more than 150 parts by weight, foam surface may not be good, and processability may be deteriorated.

Further, the titanium dioxide (TiO₂) functions of improving whiteness and hiding of the vinyl chloride resin composition.

The titanium dioxide may be included in an amount of 1 part by weight to 20 parts by weight, more preferably, 3 parts by weight to 15 parts by weight with respect to 100 parts by weight of the vinyl chloride resin. When the content of titanium dioxide is less than 1 part by weight, whiteness and hiding may be deteriorated, and therefore, color may not be properly formed after printing, and when the content is more than 20 parts by weight, there is a concern about deterioration of foam surface property.

More specifically, when the vinyl chloride resin composition according to one embodiment of the present invention may include, as additives, 0.5 parts by weight to 5 parts by weight of the dispersant, 0.5 parts by weight to 7 parts by weight of the stabilizer, 0.5 parts by weight to 7 parts by weight of the blowing agent, 30 parts by weight to 150 parts by weight of the filler, and 1 part by weight to 20 parts by weight of titanium dioxide (TiO₂) with respect to 100 parts by weight of the vinyl chloride resin, discoloration resistance may be further improved.

The vinyl chloride resin composition according to another embodiment of the present invention may include 40 parts by weight to 70 parts by weight of di(2-ethylhexyl)cyclohexane-1,4-dicarboxylate, 10 parts by weight to 30 parts by weight of the phosphate-based plasticizer, 50 parts by weight to 90 parts by weight of the antimony-based flame retardant, and 10 parts by weight to 20 parts by weight of the carboxylic acid ester-based viscosity depressant, 0.5 parts by weight to 5 parts by weight of the dispersant, 0.5 parts by weight to 7 parts by weight of the stabilizer, 0.5 parts by weight to 7 parts by weight of the blowing agent, 30 parts by weight to 150 parts by weight of the filler, and 1 part by weight to 20 parts by weight of titanium oxide with respect to 100 parts by weight of the vinyl chloride resin.

Meanwhile, the vinyl chloride resin composition according to one embodiment of the present invention may be prepared by using the above-described vinyl chloride resin, plasticizer, flame retardant, viscosity depressant, and optionally, the additives according to a method commonly known in the art, and the method is not particularly limited.

Since the vinyl chloride resin composition having the above composition includes the antimony-based flame retardant together with di(2-ethylhexyl)cyclohexane-1,4-dicarboxylate and the phosphate-based plasticizer, it may exhibit excellent flame retardancy, migration resistance, and processability, and remarkably low generation of volatile organic compounds, thereby preventing the occurrence of environmental problems.

Further, since the vinyl chloride resin composition includes DEHCH and the phosphate-based plasticizer as the plasticizer, it may have low viscosity and excellent flame retardant performance, and thus use of the solid flame retardant may be reduced. Accordingly, the content of the viscosity depressant and the liquid stabilizer which are added to lower the viscosity of plastisol may be minimized.

Accordingly, the amount of volatile organic compounds generated from the viscosity depressant and the liquid stabilizer may be reduced, and tackiness generated during a wallpaper production process may be prevented. Specifically, the vinyl chloride resin composition according to one embodiment of the present invention may have a viscosity of 1,000 cps to 20,000 cps, more specifically 2,000 cps to 18,000 cps, and within the above range, stable processability may be exhibited.

Meanwhile, in the present invention, the viscosity at 25°C of the vinyl chloride resin composition may be measured using a Brookfield viscometer (spindle #6, 20 RPM), after aging in a constant-temperature oven at 25 °C for 1 hour.

The vinyl chloride resin composition may be applied to flooring, wallpaper, tarpaulin, artificial leather, toys, or coating materials of the lower part of automobiles, and among them, when applied to the preparation of environmentally friendly silk wallpapers, it may be particularly useful by preventing discoloration.

Hereinafter, the present invention will be explained in more detail with reference to the following exemplary embodiments. However, these exemplary embodiments are presented only as the illustrations of the present invention, and the detailed description of the prevent invention is not limited by the following exemplary embodiments. Further, "%" and "part" representing contents in the following Examples and Comparative Examples are based on weight, unless otherwise described.

### [Example]

### Example 1

With respect to 100 parts by weight of a vinyl chloride resin (EL-103^{™}, produced by Hanwha Chemical, degree of polymerization: 950±50), 50 parts by weight of DEHCH, 20 parts by weight of a phosphate-based plasticizer (Reofos-65, Triphenyl Phosphates Isopropylated), 3 parts by weight of a liquid stabilizer (LFX910D-1^{™}, produced by KD Chem), 10 parts by weight of titanium oxide (TiO₂), 125 parts by weight of a calcite filler (Omya-10^{™}, produced by Omya Korea Company), 3 parts by weight of a blowing agent (DWPX03^{™} produced by Dongjin Semichem), 10 parts by weight of a carboxylic acid ester-based viscosity depressant (BYK LP-R 22274^{™}, produced by BYK, 20 °C density=0.879 g/cm³, solidification point: <-13 °C, flash point: >140 °C), 1 part by weight of a dispersant (BYK-LP W 21809^{™}, produced by BYK, 20 °C density=1.092 g/cm³, acid value: about 100 mgKOH/g, flash point: >100 °C), and 60 parts by weight of a flame retardant (antimony trioxide, produced by TMC, CO., LTD) were mixed in a Mathis mixer for 10 minutes to prepare a plastisol.

### Example 2

A plastisol was prepared in the same manner as in Example 1, except that 40 parts by weight of DEHCH and 30 parts by weight of a phosphate-based plasticizer (Reofos-65) were used as the plasticizer.

### Comparative Example 1

A plastisol was prepared in the same manner as in Example 1, except that DOTP was used as the plasticizer.

### Comparative Examples 2 to 6

Each plastisol was prepared in the same manner as in Example 1, except that the content of each component is used as in Table 1.

In Table 1 below, the content unit of each component was expressed as 'parts by weight' with respect to 100 parts by weight of the vinyl chloride resin.

**[Table 1]**

| | Plasticizer | Flame retardant | Viscosity depressant | Dispersant | Stabilizer | Titanium oxide | Filler | Blowin g agent |
|---|---|---|---|---|---|---|---|---|
| Example 1 | DEHCH:Reofos(5 0:20) | 60 | 10 | 1 | 3 | 10 | 125 | 3 |
| Example 2 | DEHCH:Reofos(4 0:30) | 60 | 10 | 1 | 3 | 10 | 125 | 3 |
| Comparative Example 1 | DOTP(70) | 60 | 10 | 1 | 3 | 10 | 125 | 3 |
| Comparative Example 2 | DEHCH:Reofos (65:5) | 60 | 10 | 1 | 3 | 10 | 125 | 3 |
| Comparative Example 3 | DEHCH:Reofos(5 0:20) | 100 | 10 | 1 | 3 | 10 | 125 | 3 |
| Comparative Example 4 | DEHCH:Reofos(5 0:20) | 40 | 10 | 1 | 3 | 10 | 125 | 3 |
| Comparative Example 5 | DEHCH:Reofos(5 0:20) | 60 | 30 | 1 | 3 | 10 | 125 | 3 |
| Comparative Example 6 | DEHCH:Reofos(5 0:20) | 60 | 3 | 1 | 3 | 10 | 125 | 3 |

### <Experimental Example>

Physical properties of the plastisols prepared in Examples and Comparative Examples were evaluated by the following methods, and results are shown in Table 2.

### (1) Viscosity

The plastisols prepared in Examples and Comparative Examples were aged in a constant-temperature oven at 25 °C for 1 hour, and then viscosity at 25 °C was measured using a Brookfield viscometer (spindle #6, 20 RPM), respectively.

### (2) Migration

Wallpapers were prepared using the plastisols of Examples and Comparative Examples. The prepared wallpapers were positioned between oilpapers to prepare each sample, and the prepared sample was left under severe conditions (temperature: 60 °C, pressure: put a weight of 5 kg on the sample having a diameter of 3 cm) for 24 hours, and change in the weight of the wallpaper was observed. The weight values of the wallpaper measured before/after the test under severe conditions were used to evaluate migration according to the following Mathematical Formula 1. Migration (%) = [(Weight of wallpaper before test under severe conditions - Weight of wallpaper after being left under severe conditions for 24 hours) / Weight of wallpaper before test under severe conditions] X 100

### (3) Foaming properties

The plastisols of Examples and Comparative Examples were used to prepare wallpaper samples, and foaming properties were evaluated by observing the surface and cross-section thereof, and by observing the size and uniformity of the foamed surface and the foamed cells.

### (4) Flame retardancy

The plastisols of Examples and Comparative Examples were used to prepare wallpapers, and flame retardancy was evaluated by measuring the carbonized area (cm²) using a flammability tester (UL94) in accordance with ^{┌}the standards of flame retardant performances_{┘} (National Fire Agency Notification No. 2019-2) Article 6 'Measurement standards and methods for flame-retardant performance of thin fabrics'.

### (5) Gelation rate

The rate at which the plasticizer was absorbed into PVC was measured using an SYNC equipment (a device that measures gelling by putting a predetermined amount of the plastisol in a pot with a fixed temperature of 120 °C, inserting a vibrating needle, and monitoring the vibration of the needle while the plastisol is solidified) to determine the gelation rate, and expressed as a score of 1 to 5 (the higher, the faster the gelation rate).

**[Table 2]**

| | Plasticizer | Viscosity (CPS) | Carbonized area | Foaming properties | Migration | Gelation rate |
|---|---|---|---|---|---|---|
| Example 1 | DEHCH:Reofos(50:20) | 16,850 | 28.80 | Good | 4.5% | 4 |
| Example 2 | DEHCH:Reofos(40:30) | 17,800 | 28.64 | Good | 4.5% | 4.5 |
| Comparative Example 1 | DOTP(70) | 24,200 | 35.81 | Good | 8.1% | 2.5 |
| Comparative Example 2 | DEHCH:Reofos (65:5) | 15,450 | 32.61 | Good | 5.9% | 3 |
| Comparative Example 3 | DEHCH:Reofos(50:20) | 28,550 | 26.45 | Good | 3.5% | 4 |
| Comparative Example 4 | DEHCH:Reofos(50:20) | 13,450 | 35.04 | Good | 7.4% | 4 |
| Comparative Example 5 | DEHCH:Reofos(50:20) | 5,950 | 40.74 | Poor | 7.4% | 2 |
| Comparative Example 6 | DEHCH:Reofos(50:20) | 33,450 | 27.73 | Good | 4.2% | 4.5 |

Referring to Table 2, as compared with use of DOTP as a plasticizer, use of DEHCH and the phosphate-based plasticizer in combination exhibited significantly improved flame retardancy and viscosity characteristics even when the same amount of the flame retardant and the viscosity depressant are used, and also exhibited excellent migration and gelation rate. In addition, the results of Comparative Examples 2 to 6 confirmed that, upon satisfying the predetermined composition of the present invention, good processability may be ensured along with excellent flame retardancy.

## Claims

1. A vinyl chloride resin composition for wallpaper, the vinyl chloride resin composition comprising, with respect to 100 parts by weight of a vinyl chloride resin, 40 parts by weight to 90 parts by weight of di(2-ethylhexyl)cyclohexane-1,4-dicarboxylate; 10 parts by weight to 30 parts by weight of a phosphate-based plasticizer; 50 parts by weight to 90 parts by weight of an antimony-based flame retardant; and 5 parts by weight to 20 parts by weight of a carboxylic acid ester-based viscosity depressant.

2. The vinyl chloride resin composition for wallpaper of claim 1, wherein the vinyl chloride resin has a degree of polymerization of 700 to 1,700, or a weight average molecular weight of 45,000 g/mol to 200,000 g/mol, wherein the degree of polymerization and the weight average molecular weight are measured as disclosed in the specification.

3. The vinyl chloride resin composition for wallpaper of claim 1, wherein a mixing weight ratio of the di(2-ethylhexyl)cyclohexane-1,4-dicarboxylate and the phosphate-based plasticizer is 4:3 to 6:1.

4. The vinyl chloride resin composition for wallpaper of claim 1, wherein the phosphate-based plasticizer is one or more selected from the group consisting of triisopropyl phenyl phosphate, tricresyl phosphate, and diphenyl cresyl phosphate.

5. The vinyl chloride resin composition for wallpaper of claim 1, wherein the antimony-based flame retardant is one or more selected from the group consisting of antimony trioxide, antimony pentoxide, metal antimony, and antimony trichloride.

6. The vinyl chloride resin composition for wallpaper of claim 1, wherein the viscosity depressant is carboxylic acid ester represented by the following Chemical Formula 1: 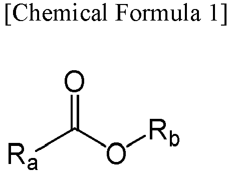 (in Chemical Formula 1, Rₐ and R_{b} are each independently a C₈₋₂₂ linear or branched alkyl group.)

7. The vinyl chloride resin composition for wallpaper of claim 1, further comprising one or more additives selected from the group consisting of a dispersant, a stabilizer, a blowing agent, a filler, and titanium oxide.

8. The vinyl chloride resin composition for wallpaper of claim 7, wherein the dispersant is a phosphoric acid ester-based compound, a fatty acid ester-based compound, or a mixture thereof.

9. The vinyl chloride resin composition for wallpaper of claim 7, wherein the stabilizer is one or more selected from the group consisting of Na-Zn-based compounds, Ca-Zn-based compounds, K-Zn-based compounds, Ba-Zn-based compounds, organic tin-based compounds, metallic soap compounds, phenolic compounds, and phosphorous acid ester-based compounds.

10. The vinyl chloride resin composition for wallpaper of claim 7, wherein the blowing agent includes a chemical blowing agent, a physical blowing agent, or a mixture thereof, and
the filler is one or more selected from the group consisting of calcium carbonate, calcite, talc, kaolin, silica, alumina, magnesium hydroxide, and clay.

11. The vinyl chloride resin composition for wallpaper of claim 1, further comprising, with respect to 100 parts by weight of the vinyl chloride resin, 0.5 parts by weight to 5 parts by weight of a dispersant, 0.5 parts by weight to 7 parts by weight of a stabilizer, 0.5 parts by weight to 7 parts by weight of a blowing agent, 30 parts by weight to 150 parts by weight of a filler, and 1 to 20 parts by weight of titanium oxide.

12. The vinyl chloride resin composition for wallpaper of claim 1, wherein the vinyl chloride resin composition has a viscosity at 25 °C of 1,000 cps to 20,000 cps, as measured under conditions of spindle no. 6 and a rotational speed of 20 RPM using a rotary viscometer, after aging at 25 °C for 1 hour.

13. A wallpaper comprising the vinyl chloride resin composition for wallpaper of claim 1.

## Patentansprüche

1. Vinylchloridharzzusammensetzung für Tapeten, die Vinylchloridharzzusammensetzung umfassend, bezogen auf 100 Gewichtsteile eines Vinylchloridharzes, 40 Gewichtsteile bis 90 Gewichtsteile Di(2-ethylhexyl)cyclohexan-1,4-dicarboxylat; 10 Gewichtsteile bis 30 Gewichtsteile eines Weichmachers auf Phosphatbasis; 50 Gewichtsteile bis 90 Gewichtsteile eines Flammschutzmittels auf Antimonbasis; und 5 Gewichtsteile bis 20 Gewichtsteile eines Viskositätsverminderers auf Carbonsäureesterbasis.

2. Vinylchloridharzzusammensetzung für Tapeten nach Anspruch 1, wobei das Vinylchloridharz einen Polymerisationsgrad von 700 bis 1 700 oder ein gewichtsgemitteltes Molekulargewicht von 45 000 g/mol bis 200 000 g/mol aufweist, wobei der Polymerisationsgrad und das gewichtsgemittelte Molekulargewicht wie in der Beschreibung offenbart gemessen werden.

3. Vinylchloridharzzusammensetzung für Tapeten nach Anspruch 1, wobei das Mischgewichtsverhältnis des Di(2-ethylhexyl)cyclohexan-1,4-dicarboxylats und des Weichmachers auf Phosphatbasis 4:3 bis 6:1 beträgt.

4. Vinylchloridharzzusammensetzung für Tapeten nach Anspruch 1, wobei der Weichmacher auf Phosphatbasis einer oder mehrere, ausgewählt aus der Gruppe, bestehend aus Triisopropylphenylphosphat, Tricresylphosphat und Diphenylcresylphosphat, ist.

5. Vinylchloridharzzusammensetzung für Tapeten nach Anspruch 1, wobei das Flammschutzmittel auf Antimonbasis eines oder mehrere, ausgewählt aus der Gruppe, bestehend aus Antimontrioxid, Antimonpentoxid, Antimonmetall und Antimontrichlorid, ist.

6. Vinylchloridharzzusammensetzung für Tapeten nach Anspruch 1, wobei der Viskositätsverminderer ein Carbonsäureester, dargestellt durch die folgende Chemische Formel 1, ist: 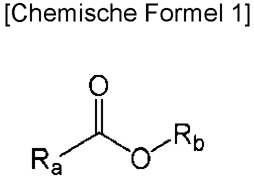 (in der Chemischen Formel 1 sind Rₐ und R_{b} jeweils unabhängig voneinander eine lineare oder verzweigte C₈₋₂₂-Alkylgruppe.)

7. Vinylchloridharzzusammensetzung für Tapeten nach Anspruch 1, weiter umfassend ein oder mehrere Additive, ausgewählt aus der Gruppe, bestehend aus einem Dispergiermittel, einem Stabilisator, einem Treibmittel, einem Füllstoff und Titanoxid.

8. Vinylchloridharzzusammensetzung für Tapeten nach Anspruch 7, wobei das Dispergiermittel eine Verbindung auf Phosphorsäureesterbasis, eine Verbindung auf Fettsäureesterbasis oder ein Gemisch davon ist.

9. Vinylchloridharzzusammensetzung für Tapeten nach Anspruch 7, wobei der Stabilisator einer oder mehrere ist, ausgewählt aus der Gruppe, bestehend aus Verbindungen auf Na-Zn-Basis, Verbindungen auf Ca-Zn-Basis, Verbindungen auf K-Zn-Basis, Verbindungen auf Ba-Zn-Basis, organischen Verbindungen auf Zinn-Basis, Metallseifenverbindungen, Phenolverbindungen und Verbindungen auf Phosphorsäureester-Basis.

10. Vinylchloridharzzusammensetzung für Tapeten nach Anspruch 7, wobei das Treibmittel ein chemisches Treibmittel, ein physikalisches Treibmittel oder ein Gemisch davon einschließt, und der Füllstoff einer oder mehrere, ausgewählt aus der Gruppe, bestehend aus Calciumcarbonat, Kalzit, Talk, Kaolin, Siliziumoxid, Aluminiumoxid, Magnesiumhydroxid und Ton, ist.

11. Vinylchloridharzzusammensetzung für Tapeten nach Anspruch 1, weiter umfassend, bezogen auf 100 Gewichtsteile des Vinylchloridharzes, 0,5 Gewichtsteile bis 5 Gewichtsteile eines Dispergiermittels, 0,5 Gewichtsteile bis 7 Gewichtsteile eines Stabilisators, 0,5 Gewichtsteile bis 7 Gewichtsteile eines Treibmittels, 30 Gewichtsteile bis 150 Gewichtsteile eines Füllstoffs und 1 bis 20 Gewichtsteile Titanoxid.

12. Vinylchloridharzzusammensetzung für Tapeten nach Anspruch 1, wobei die Vinylchloridharzzusammensetzung eine Viskosität bei 25 °C von 1 000 cps bis 20 000 cps aufweist, gemessen unter den Bedingungen der Spindel Nr. 6 und einer Rotationsgeschwindigkeit von 20 U/min unter Verwendung eines Rotationsviskosimeters, nach 1-stündiger Alterung bei 25 °C.

13. Tapete, umfassend die Vinylchloridharzzusammensetzung für Tapeten nach Anspruch 1.

## Revendications

1. Composition de résine de chlorure de vinyle pour papier peint, la composition de résine de chlorure de vinyle comprenant, pour 100 parties en poids d'une résine de chlorure de vinyle, 40 parties en poids à 90 parties en poids de 1,4-dicarboxylate de di(2-éthylhexyl)cyclohexane ; 10 parties en poids à 30 parties en poids d'un plastifiant à base de phosphate ; 50 parties en poids à 90 parties en poids d'un retardateur de flamme à base d'antimoine ; et 5 parties en poids à 20 parties en poids d'un abaisseur de viscosité à base d'ester d'acide carboxylique.

2. Composition de résine de chlorure de vinyle pour papier peint selon la revendication 1, dans laquelle la résine de chlorure de vinyle a un degré de polymérisation de 700 à 1 700, ou un poids moléculaire moyen en poids de 45 000 g/mol à 200 000 g/mol, dans laquelle le degré de polymérisation et le poids moléculaire moyen en poids sont mesurés comme décrit dans la spécification.

3. Composition de résine de chlorure de vinyle pour papier peint selon la revendication 1, dans laquelle un rapport pondéral de mélange du 1,4-dicarboxylate de di(2-éthylhexyl)cyclohexane et du plastifiant à base de phosphate est de 4:3 à 6:1.

4. Composition de résine de chlorure de vinyle pour papier peint selon la revendication 1, dans laquelle le plastifiant à base de phosphate est un ou plusieurs composés choisis dans le groupe constitué par le triisopropylphénylphosphate, le tricrésylphosphate et le diphénylcrésylphosphate.

5. Composition de résine de chlorure de vinyle pour papier peint selon la revendication 1, dans laquelle le retardateur de flamme à base d'antimoine est un ou plusieurs composés choisis dans le groupe constitué par le trioxyde d'antimoine, le pentoxyde d'antimoine, l'antimoine métallique et le trichlorure d'antimoine.

6. Composition de résine de chlorure de vinyle pour papier peint selon la revendication 1, dans laquelle l'abaisseur de viscosité est un ester d'acide carboxylique représenté par la formule chimique 1 suivante : 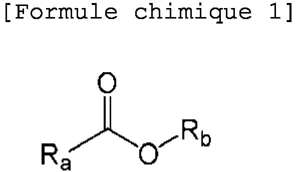 (dans la formule chimique 1, Rₐ et R_{b} sont chacun indépendamment un groupe alkyle linéaire ou ramifié en C₈₋₂₂ .)

7. Composition de résine de chlorure de vinyle pour papier peint selon la revendication 1, comprenant en outre un ou plusieurs additifs choisis dans le groupe constitué par un dispersant, un stabilisant, un agent gonflant, une charge et un oxyde de titane.

8. Composition de résine de chlorure de vinyle pour papier peint selon la revendication 7, dans laquelle le dispersant est un composé à base d'ester d'acide phosphorique, un composé à base d'ester d'acide gras ou un mélange de ceux-ci.

9. Composition de résine de chlorure de vinyle pour papier peint selon la revendication 7, dans laquelle le stabilisant est un ou plusieurs composés choisis dans le groupe constitué par des composés à base de Na-Zn, des composés à base de Ca-Zn, des composés à base de K-Zn, des composés à base de Ba-Zn, des composés organiques à base d'étain, des composés de savon métallique, des composés phénoliques et des composés à base d'ester d'acide phosphoreux.

10. Composition de résine de chlorure de vinyle pour papier peint selon la revendication 7, dans laquelle l'agent gonflant comprend un agent gonflant chimique, un agent gonflant physique ou un mélange de ceux-ci, et la charge est un ou plusieurs composés choisis dans le groupe constitué par le carbonate de calcium, la calcite, le talc, le kaolin, la silice, l'alumine, l'hydroxyde de magnésium et l'argile.

11. Composition de résine de chlorure de vinyle pour papier peint selon la revendication 1, comprenant en outre, pour 100 parties en poids de la résine de chlorure de vinyle, 0,5 partie en poids à 5 parties en poids d'un dispersant, 0,5 partie en poids à 7 parties en poids d'un stabilisant, 0,5 partie en poids à 7 parties en poids d'un agent gonflant, 30 parties en poids à 150 parties en poids d'une charge et 1 à 20 parties en poids d'oxyde de titane.

12. Composition de résine de chlorure de vinyle pour papier peint selon la revendication 1, dans laquelle la composition de résine de chlorure de vinyle a une viscosité à 25 °C de 1 000 cps à 20 000 cps, telle que mesurée dans des conditions de broche n° 6 et une vitesse de rotation de 20 tr/min à l'aide d'un viscosimètre rotatif, après vieillissement à 25 °C pendant 1 heure.

13. Papier peint comprenant la composition de résine de chlorure de vinyle pour papier peint selon la revendication 1.
